# EUROPEAN PATENT APPLICATION

(11) **EP 2 733 949 A2**
(43) Date of publication of application: **21.05.2014**
(21) Application number: 13191666.0
(22) Date of filing: 05.11.2013
(51) Int. Cl.: H04N 13/04

(54) **Three dimensional image display system and adjusting method thereof**

(30) Priority: 20.11.2012 TW 101143276
(71) Applicant: InnoLux Corporation, Chu-Nan, Miao-Li 350 (TW)
(72) Inventor: Hung, Chia-Liang, 350 Miao-Li County (TW)
(74) Representative: Von Kreisler Selting Werner - Partnerschaft von Patentanwälten und Rechtsanwälten mbB

(57) **Abstract**

An adjusting method for a three dimensional image display system, comprising following steps. A three dimensional image displaying function is activated to display a three dimensional image. An adjusting pattern is displayed on the display device. An adjusting function is performed according to the adjusting pattern to obtain an adjusting result. A computing result is generated according to the adjusting result. An adjusted image is displayed on the display device according to the computing result.

## Description

### BACKGROUND OF THE INVENTION

### Field of the Invention

The invention relates in general to a three-dimensional image display system and an adjusting method thereof, and more particularly to a three-dimensional image display system capable of performing an adjusting step and an adjusting method thereof.

### Description of the Related Art

The three-dimensional (3D) display provides images with parallax to the viewer's two eyes respectively, such that the images merged to generate a stereoscopic feeling by the viewer. Most of the 3D displays available in the market are taken in conjunction with glasses, and have many disadvantages in terms of signal transmission and synchronization, price, weight, comfort and so on. Therefore, the naked-eye 3D (auto-stereoscopic) display technology is a future trend in the 3D display technology.

The naked-eye 3D display mainly has two types, namely, the lenticular lens display and the parallax barrier display. Both types of displays form a stereoscopic image by way of space distribution. The lenticular lens display is based on the principle of refraction. The lenticular lens makes the light be refracted and deviated from the direction to the display and emitted at an angle, such that the left eye and right-eye images are correctly projected to the viewer's left eye and right eye respectively. The parallax barrier display is based on the principle of light shielding. A grating formed by a plurality of barrier areas and the transparent areas staggered with each other is designed, such that the images viewed by the viewer's left and right eyes through the grating are correct left eye and right-eye images respectively.

The naked-eye 3D display using space distribution has a predetermined preferred viewing position. If the viewer is not viewing images from these positions, the viewer's left eye may view the right-eye image and right eye may view the left-eye image and the other way round. Under such circumstances, X-talk may occur and impede the stereoscopic visual effect. In addition, suppose the naked-eye 3D display is a multi-view display. When the viewer's left eye and right eye cross the boundary of the view-angle period (for example, suppose there are N view-angles, and the viewer's left eye moves to the N^{th} image from the (N-1)^{th} image and right eye moves to the first image from the N^{th} image), the stereoscopic image may have big jumping which causes discomfort to the viewer.

### SUMMARY OF THE INVENTION

The invention is directed to a three-dimensional image display system and an adjusting method thereof. The three-dimensional image display generates a computing result in an adjusting step, generates a computing result according to an adjusting result obtained in an adjusting step, and outputs an adjusted three-dimensional image to the display device according to the computing result, such that the user will experience discomfort arising from viewing an unadjusted three-dimensional image.

According to one embodiment of the present invention, a three-dimensional image display adjusting method for a three-dimensional image display system is disclosed. The method comprises following steps: displaying an adjusting pattern on a display device; performing an adjusting step to obtain an adjusting result according to the adjusting pattern; generating a computing result according to the adjusting result; and outputting an adjusted three-dimensional image to the display device according to the computing result.

According to another embodiment of the present invention, a three-dimensional image display system is disclosed. The system comprises a display device and a processing device. The display device having a display unit displays a three-dimensional image and an adjusting pattern. The processing device electrically connected to the display unit performs an adjusting step to obtain an adjusting result according to the adjusting pattern, generates a computing result according to the adjusting result, and outputs an adjusted three-dimensional image to the display unit according to the computing result.

The above and other aspects of the invention will become better understood with regard to the following detailed description of the preferred but non-limiting embodiment(s). The following description is made with reference to the accompanying drawings.

### BRIEF DESCRIPTION OF THE DRAWINGS

FIG. 1A shows a schematic diagram of a three-dimensional image display adjusting system according to an embodiment of the invention;

FIG. 1B shows a schematic diagram of a three-dimensional image display adjusting method according to an embodiment of the invention;

FIG. 2A shows a schematic diagram of the pixel information of a display module and the pattern of an optical control module according to an embodiment of the invention;

FIG. 2B shows a schematic diagram of operation tables NM1~NM8 and view-angle matrix tables S1~S8 according to an embodiment of the invention;

FIG. 3 shows a schematic diagram of operation tables NM1~NM8 and view-angle matrix tables J'1~J'8 according to another embodiment of the invention;

FIG. 4 shows a schematic diagram of operation table NM1~NM7 and view-angle matrix table K'1~K'7 according to a second embodiment of the invention;

FIG. 5A shows a schematic diagram of a three-dimensional image display adjusting system according to another embodiment of the invention;

FIG. 5B shows a schematic diagram of a three-dimensional image display adjusting method according to another embodiment of the invention;

FIG. 6A shows a schematic diagram of a three-dimensional image display adjusting system according to an alternate embodiment of the invention;

FIG. 6B shows a schematic diagram of a three-dimensional image display adjusting method according to an alternate embodiment of the invention;

FIG. 7 shows a flowchart of a three-dimensional image display adjusting method according to an embodiment of the invention.

### DETAILED DESCRIPTION OF THE INVENTION

### First Embodiment

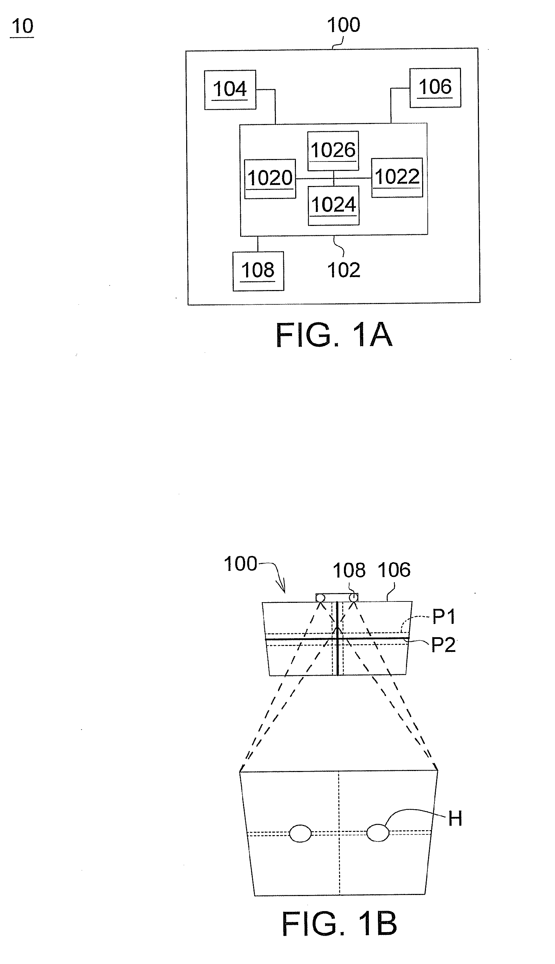

FIG. 1 shows a schematic diagram of a three-dimensional image display adjusting system 10 according to an embodiment of the invention. Referring to FIG. 1, the three-dimensional image display system 10 comprises a display device 100 such as a 2D/3D switchable display device. The display device 100 comprises a processing device 102, an activating unit 104, a display unit 106 and an image capturing unit 108. The processing device 102 electrically connects the activating unit104, the display unit 106 and the image capturing unit 108. The processing device 102 may comprise a storage unit 1020, a signal generation unit 1022, a computing unit 1024 and a driving unit 1026. The driving unit 1026 is used for providing a driving signal to the display unit 106.

In the present embodiment, the activating unit 104 may perform an activating step to activate a three-dimensional image displaying function of the display device. For example, the activating unit 104 may comprise a press button or a touch button, and may activate the three-dimensional image displaying function of the display device when the user presses the press button or the touch button. Or, the activating unit 104 may activate the three-dimensional image displaying function with a remote control signal received from a remote controller, and the invention is not limited thereto.

The display unit 106 may comprise an optical control module (not illustrated) and a display module (not illustrated). After the optical control module and the display module are assembled together, a bias voltage can be applied to the electrodes disposed on two sides of the optical control module for adjusting the display media of the optical control module to generate different arrangements, such as a transparent mode and a light-block mode, for forming a switchable grating. Thus, a 2D/3D switchable display function of the display device 10 can be achieved.

In an embodiment, the 2D/3D switchable display function can be achieved by using an active lens. The optical control module can be formed by a lens layer and a liquid crystal panel (such as a TN liquid crystal panel). The design of the liquid crystal panel is as follows: During 2D operation, the liquid crystal panel can offset the refraction effect of the lens layer such that the light penetrating the display module is not affected by the optical control module and can display the 2D image normally. During 3D operation, the active lens has the effect of a lenticular lens. In another embodiment, the optical control module can be replaced by an ordinary lenticular lens patch or an ordinary grating patch in which the transparent areas and the light-block areas are staggered with each other, and the invention is not limited thereto. However, the display device comprising nonadjustable grating or lenticular lens patch cannot change its type, and cannot be switched from the three-dimensional display function to the two-dimensional display function.

FIG. 1B shows a schematic diagram of a three-dimensional image display adjusting method according to an embodiment of the invention. Referring to FIGS. 1A~1B at the same time. The display device 100 has a display unit 106 used for displaying an adjusting pattern. The adjusting pattern may comprise a reference image P1 and a registration image P2. In an embodiment, the image capturing unit 108 firstly confirms the user's initial information H (such as the initial position of a hand gesture). Meanwhile, based on the sight observation, the user judges whether the registration image P2 is displayed at a correct position. If the position of the registration image P2 is incorrect, then the user may provide an adjusting command (such as an action or a hand gesture) corresponding to the reference image P1 to perform an adjusting step.

For example, as indicated in FIG. 1B, the image capturing unit 108 firstly confirms the initial information H. In the present embodiment, the reference image P1 is such as a hollowed cross, and the registration image P2 is such as a solid-line cross, but the invention is not limited thereto. For example, the reference image P1 and the registration image P2 can be realized in the form of other shapes, patterns or colors. When the cross represented by the registration image P2 is located within the center of the hollowed cross represented by the reference image P1, the image is correctly formed. When the cross represented by the registration image P2 is not located within the center of the hollowed cross represented by the reference image P1, the user may use an action or a hand gesture to provide an adjusting command for adjusting the registration image P2 to be located within the center of the hollowed cross represented by the reference image P1. Meanwhile, the image capturing unit 108 may capture the user's adjusting command.

Then, the image capturing unit 108 may output the adjusting command and the initial information H to the processing device 102. After the processing device 102 compares an adjusting command with the initial information H, the processing device 102 obtains an adjusting message such as shifting the registration image P2 for a particular distance in a particular direction. If the reference image P1 and the registration image P2 are realized in the form of colors, the adjusting message can be RGB color levels. Since the adjusting command is generated according to a comparison between the reference image P1 and the frame information currently displayed by the display unit 106, the adjusting message is also associated with the comparison result between the reference image P1 and the frame information currently displayed by the display unit 106.

If the adjustment cannot be completed by performing the adjusting step for only one time, the adjusting step can be repeated for many times. Meanwhile, after performing the adjusting step for many times, the processing device 102 obtains a plurality of adjusting messages. The processing device 102 may add up the adjusting messages to obtain an adjusting result. Then, the user may judge whether the adjusting result is correct according to the observed image or leave the judgment to be done by the processing device of the three-dimensional image display. If it is judged that the adjusting result is correct, then the computing unit 1024 generates a computing result according to the adjusting result and outputs an adjusted image to the display unit 106 according to the computing result.

In an embodiment, the deformation relationship between the reference image P1 and the registration image P2 can be calculated according to the angle at which the user views the display unit 106. When the user views the display unit 106 at an angle deviating from the direction perpendicular to the display unit 106, the processing device 102 can calculates the deformation relationship between the reference image P1 and the registration image P2 according to the angle at which the user deviates from the direction perpendicular to the display unit 106 as well as necessary adjustments corresponding to the deformation relationship. The processing device 102 may generate adjusting commands according to the adjustments corresponding to different angles. Also, the user can directly provide an adjusting command according to his/her visual perception of viewing the displayed image. Therefore, the adjusting method disclosed in above embodiments of the invention can achieve best adjusting effect according to the user's viewing angle and accordingly generate correct three-dimensional display effect. The correct three-dimensional display effect can either be a display effect set by the user according to his/her visual perception or a display effect pre-set by the processing device 102.

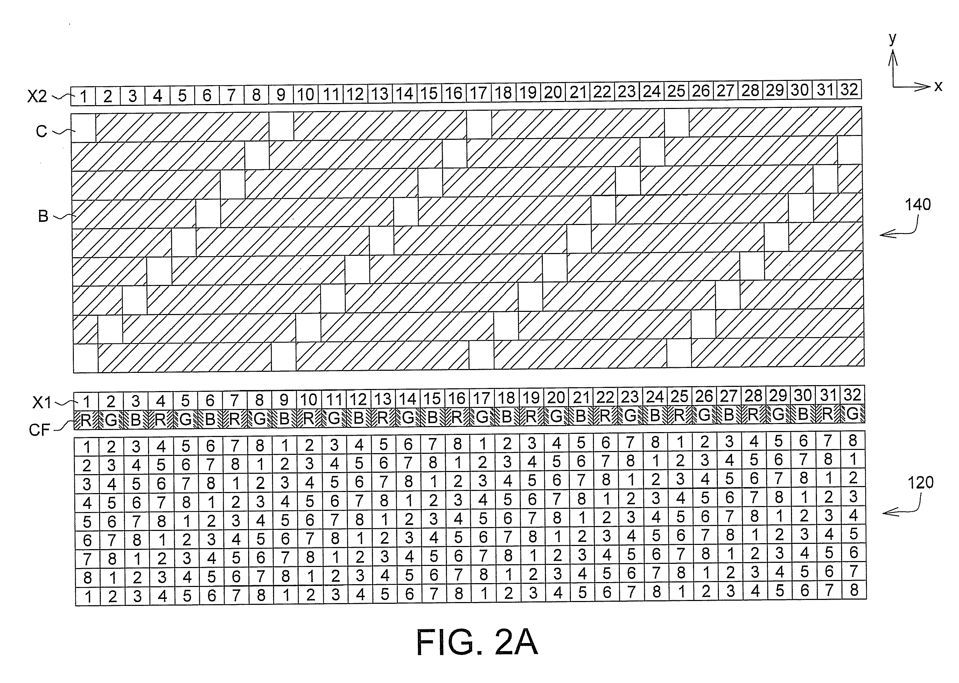

Detailed procedures of the method of generating a computing result by a computing unit 1024 are disclosed below. Referring to FIG. 2A, a schematic diagram of the pixel information of a display module 140 and the pattern of an optical control module 120 according to an embodiment of the invention is shown (only partial contents of the matrix are illustrated). As indicated in FIG. 2A, the optical control module 140 can display a periodic grating pattern (such as a step periodic pattern) formed by a plurality of transparent areas C and light-block areas B staggered with each other. In other embodiments, the transparent areas C and the light-block areas B can be arranged in the form of strips or slant lines, and the invention is not limited thereto. In FIG. 2A, position X2 represents the X-axis absolute position number corresponding to the transparent areas C and the light- block areas B of the optical control module 140; position X1 represents the X-axis absolute position number corresponding to the pixel information of the display module 120; color layer CF represents the corresponding red(R)/green(G)/blue(B) colors displayed by the pixel information. In the present embodiment, the number of view-angles is exemplified by 8. However, the embodiments of the invention can be used in any multi-view display device having more than 2 view-angles, and the invention is not limited thereto.

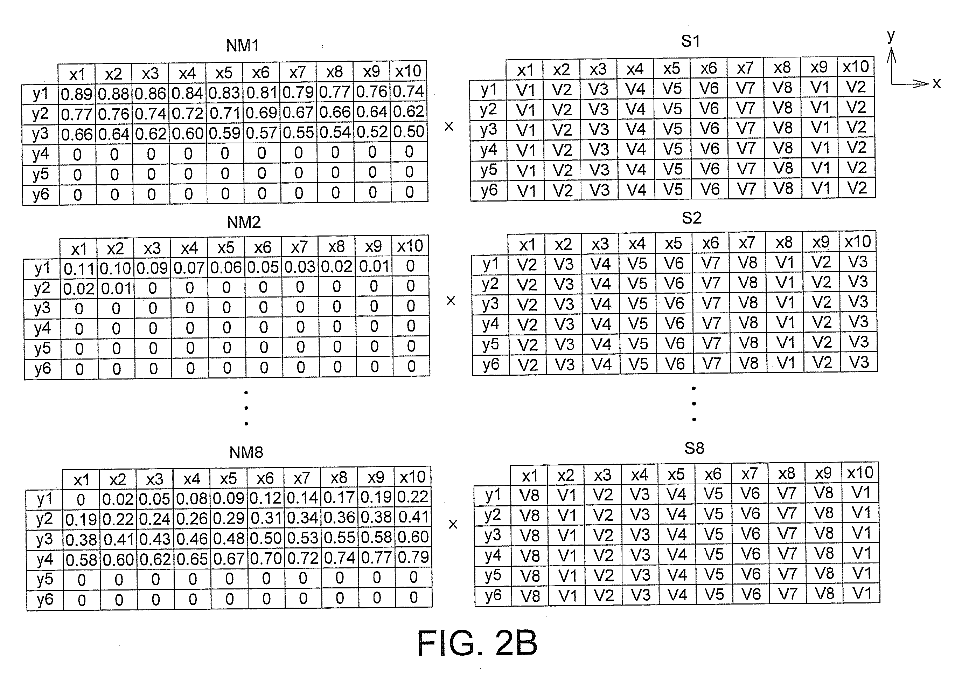

FIG. 2B shows a schematic diagram of operation tables NM1~NM8 and view-angle matrix tables S1~S8 according to an embodiment of the invention. The sizes of the operation tables NM1~NM8 and the view-angle matrix tables S1~S8 are associated with the resolution of the display device 100. In the present embodiment, the view-angle matrix tables S1~S8 and the operation tables NM1~NM8 are not directly corresponding to the pixel information of the display module 120. FIG. 2B only illustrates partial contents of the tables. The view-angle matrix tables S1~S8 can be stored in the storage unit 1020 (such as a memory).

Referring to FIG. 2A and 2B at the same time. When shooting N-view frames (not illustrated) of an image, each view-angle frame has M positions (matrix arrangement) corresponding to M pixel information, wherein N is a natural number greater than 2, and M is a natural number. The storage unit has N initial matrixes (not illustrated). Each initial matrix has M positions for receiving the view-angle frame information. The view-angle frame information is selected from the view-angle frames of an image. The initial matrix receiving the view-angle frame information is stored as a view-angle matrix table S. For example, when there are 8 view-angles, the storage unit stores 8 view-angle matrix tables S1~S8 whose arrangements of view-angle frame information are different from each other.

Detailed procedures of one of the methods of applying the view-angle frame information to the corresponding initial matrix to generate a view-angle matrix table S are disclosed below. Only partial contents are illustrated and exemplified for description purpose. As indicated in FIG. 2B, the view-angle information V1 of the first column and the ninth column of the first view-angle frame are applied to the position of the first column x1 and the ninth column x9 of the view-angle matrix table S1. The view-angle information V2 of the second column and the tenth column of the second view-angle frame are applied to the position of the second column x2 and the tenth column x10 of the view-angle matrix table S1. The view-angle information V3 of the third column of the third view-angle frame is applied to the position of the third column x3 of the view-angle matrix table S1. By the same analogy, the complete first view-angle matrix table S1 can be obtained. The differences between the view-angle matrix tables S1~S8 lie in the columns from which the view-angle frame information are sampled (translated) and the positions of the initial matrix to which the view-angle frame information are applied (translated). The method for sampling the view-angle information by columns is not restrictive, and the view-angle information can be sampled by rows, slant lines, zigzag lines or even irregular points.

The signal generation unit 1022 is used for generating N operation tables having the same number as that of the view-angles, and inputting adjustment parameters (such as adjusting result) to the processing device for adjusting the contents of the operation tables. For example, the present embodiment is exemplified by 8 view-angles, and accordingly 8 matrix type operation tables NM1~NM8 are generated. The operation tables NM1~NM8 correspond to the view-angle matrix tables S1~S8 respectively, and the numbers of columns and rows of the operation tables NM1~NM8 are the same as that of the view-angle matrix tables S1~S8. Each of the operation tables NM1~NM8 stores a plurality of weighting information associated with the sizes of the transparent areas C and the light- block areas B used for optical control (such as the length ratio between the transparent areas C and the light- block areas B). In the present embodiment, the sum of the weights corresponding to the same position (the same column and the same row) in each of the operation tables NM1~NM8 is not greater than 1. Then, the computing unit 1024 can perform matrix computation on the view-angle matrix tables S1~S8 and the operation tables NM1~NM8 to calculate the sum of the product of each view-angle frame information and its corresponding weighting information and accordingly output an adjusted frame information (such as an adjusted three-dimensional image).

**Table 1**

| | x1 | x2 | x3 | x4 | x5 | x6 | x7 | x8 | x9 | x10 |
|---|---|---|---|---|---|---|---|---|---|---|
| y1 | V1' | V2' | V3' | V4' | V5' | V6' | V7' | V8' | V1' | V2' |
| y2 | V1' | V2' | V3' | V4' | V5' | V6' | V7' | V8' | V1' | V2' |
| y3 | V1' | V2' | V3' | V4' | V5' | V6' | V7' | V8' | V1' | V2' |
| y4 | V1' | V2' | V3' | V4' | V5' | V6' | V7' | V8' | V1' | V2' |
| y5 | V1' | V2' | V3' | V4' | V5' | V6' | V7' | V8' | V1' | V2' |
| y6 | V1' | V2' | V3' | V4' | V5' | V6' | V7' | V8' | V1' | V2' |

Table 1 shows an adjusted first view-angle matrix tables S1'. Let the adjusted first view-angle matrix tables S1' of Table 1 be taken for example. The information of the pixel V' at the coordinate (x1, y1) of the adjusted first view-angle matrix table S1' is equal to the sum of the product of the weighting information at the coordinate (x1, y1) of the operation table NM1 and the view-angle information at the coordinate (x1, y1) of the view-angle matrix table S1 plus the product of the weighting information at the coordinate (x1, y1) of the operation table NM2 and the view-angle information at the coordinate (x1, y1) of the view-angle matrix table S2 up to the product of the weighting information at the coordinate (x1, y1) of the last operation table NM8 and the view-angle information at the coordinate (x1, y1) of the last view-angle matrix table S8. That is, pixel V1'=0.89×v1+0.11×v2+...+0×v8. The information of the pixels at other coordinates can be obtained according to the same method for obtaining the information of the pixel V1'.

**Table 2**

| | | | | | | | | |
|---|---|---|---|---|---|---|---|---|
| View-Angle Information J | V1 | V2 | V3 | V4 | V5 | V6 | V7 | V8 |
| View-Angle Information J' | V1 | V2 | V3 | V4 | V5 | V4 | V3 | V2 |

Table 2 shows a schematic diagram of a transformation method of an even-numbered N-view-angle matrix according to another embodiment of the invention. The view-angle information J represents a non-transformed view-angle information, and the view-angle information J' represents a transformed view-angle information. When the number of view-angles is even-numbered, the view-angle information in the G^{th} column of the G^{th} view-angle frame is applied to the (G+zN)^{th} column of the first initial matrix. Moreover, the transformation column corresponds to a half of the number of view-angles plus 1, and the subsequent view-angle information are transformed in a progressively decreasing manner. The view-angle information in the (N-H+2)^{th} column of the (N-H+2)^{th} view-angle frame is applied to the (H+zN)^{th} column of the first initial matrix. Wherein, G is a natural number between 1 and (N/2)+1, H is a natural number between (N/2)+2 and N, z is a natural number greater than 0 or is equal to 0, and the upper limit of z is associated with the resolution of the frame. Here, the method for sampling the view-angle information columns is not restrictive, and the view-angle information can be sampled by rows, slant lines, zigzag lines or even irregular points. By using the position of the view-angles close to the middle column as a transformation column for transforming the view-angle information in a progressively decreasing manner, the original big jumping from the view-angle information V8 to the view-angle information V1 can be avoided, such that the viewer will not experience discomfort arising from viewing view-angle information having big jumping.

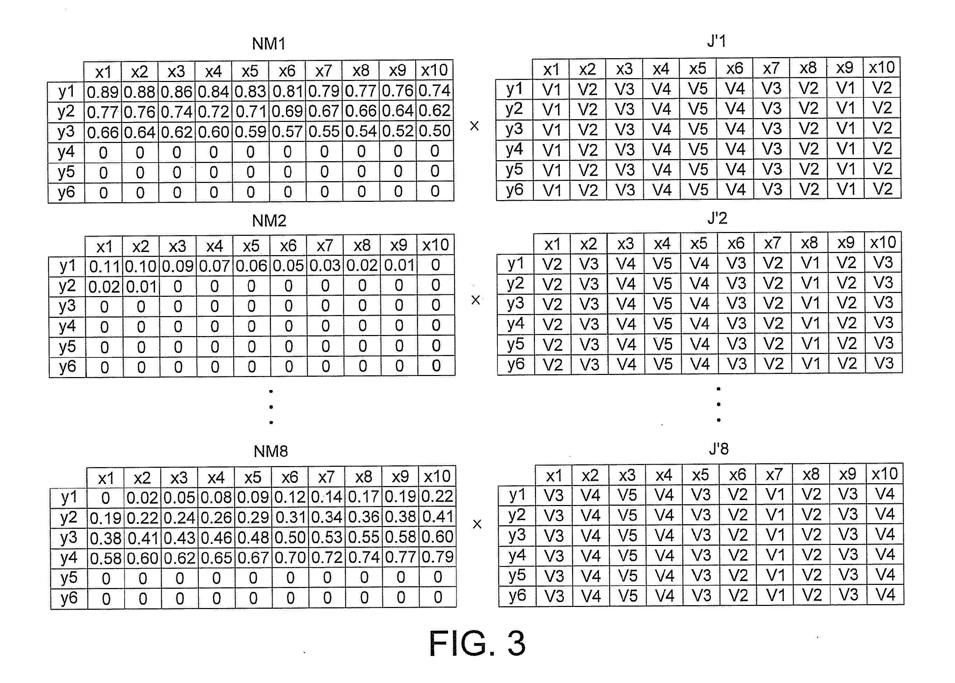

FIG. 3 shows a schematic diagram of operation tables NM1~NM8 and view-angle matrix tables J'1~J'8 according to another embodiment of the invention. The weighting information stored in the operation tables NM1~NM8 are the same as that stored in the operation tables NM1~NM8 of the first embodiment. The calculation of the adjusted view-angle information is similar to that of the first embodiment except for the view-angle information stored in the view-angle matrix tables J'1~J'8. The view-angle matrix tables J'1~J'8 of FIG. 3 are obtained by replacing corresponding view-angle information of the view-angle matrixes of FIG. 2B with the transformed view-angle information J' of Table 2. Then, the processing device calculates the sum of the product of each view-angle information of each of the view-angle matrix tables J'1~J'8 and its corresponding weighting information and outputs adjusted 8 view-angle matrix pixel information.

**Table 3**

| | | | | | | | |
|---|---|---|---|---|---|---|---|
| View-Angle Information K | V1 | V2 | V3 | V4 | V5 | V6 | V7 |
| View-Angle Information K' | V1 | V2 | V3 | V4 | V4 | V3 | V2 |

Table 3 shows a schematic diagram of a transformation method of an odd-numbered view-angle matrix according to another embodiment of the invention. The view-angle information K represents a non-transformed view-angle information, and the view-angle information K' represents a transformed view-angle information. When the number of view-angles is odd-numbered, the transformation column corresponds to a half of the sum of the number of view-angles plus 1. The view-angle information in the G^{th} column of the G^{th} view-angle frame is applied to the (G+zN)^{th} column of the first initial matrix. Moreover, the view-angle information in the (N-H+2)^{th} column of the (N-H+2)^{th} view-angle frame is applied to the (H+zN)^{th} column of the first initial matrix. Wherein, G is a natural number between 1 and (N+1/2), H is a natural number between (N+1/2)+1 and N, z is a natural number greater than 0 or is equal to 0, and the upper limit of z is associated with the resolution of the frame. Here, the method for sampling the view-angle information columns is not restrictive, and the view-angle information can be sampled by rows, slant lines, zigzag lines or even irregular points.

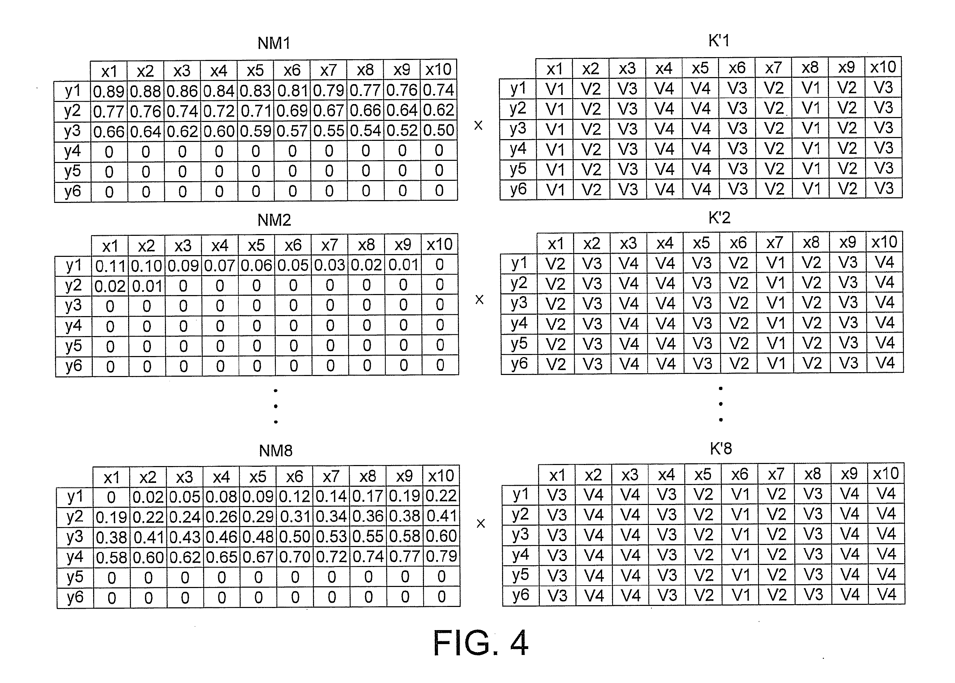

FIG. 4 shows a schematic diagram of operation tables NM1~NM7 and view-angle matrix tables K'1~K'7 according to another embodiment of the invention. The weighting information stored in the operation tables NM1~NM7 are the same as that stored in the operation tables NM1~NM7 of the first embodiment. The calculation of the adjusted view-angle information is similar to that of the first embodiment except for the view-angle information stored in the view-angle matrix tables K'1~K'7. The view-angle matrix tables K'1~K'7 of FIG. 4 are obtained by replacing corresponding view-angle information of the view-angle matrixes of FIG. 2B with the transformed view-angle information K' of Table 3. By using the position of the view-angles close to the middle column as a transformation column for transforming the view-angle information in a progressively decreasing manner, the original big jumping from the view-angle information V7 to the view-angle information V1 can be avoided, such that the viewer will not experience discomfort arising from viewing view-angle information having big jumping. Therefore, an adjusted image is outputted to the display unit 106 according to the computing result, and the display unit 106 can display a correct three-dimensional image.

### Second Embodiment

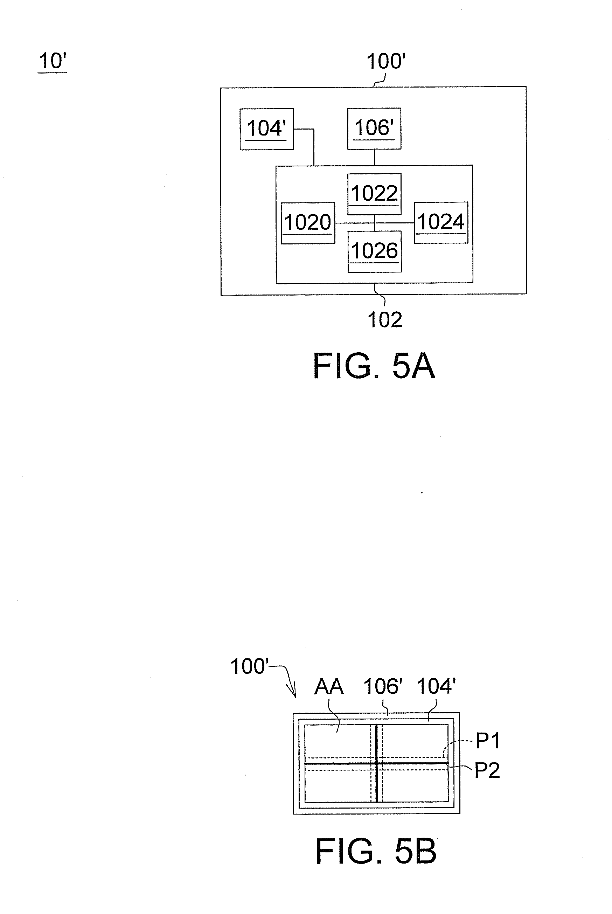

FIG. 5A shows a schematic diagram of a three-dimensional image display adjusting system 10 according to another embodiment of the invention. Referring to FIG. 5A. The three-dimensional image display system 10' comprises a display device 100', such as a 2D/3D switchable display device. The display device 100' comprises a processing device 102, an activating unit104' and a display unit 106'. The processing device 102 may comprise a storage unit 1020, a signal generation unit 1022, a computing unit 1024 and a driving unit 1026. Since the display device 100' is similar to the display device 100, the same elements retain the same designations, and the similarities are not repeated here.

FIG. 5B shows a schematic diagram of a three-dimensional image display adjusting method according to another embodiment of the invention. Referring to FIG. 5A~5B at the same time. The display device 100 has a display unit 106', such as a touch display unit, used for displaying an adjusting pattern comprising the reference image P1 and the registration image P2. In the present embodiment, the activating unit 104' can be realized by an optical element. The optical element is such as a cover having a lenticular lens or a grating. The cover can cover the display area AA of the display unit 106' for changing the light outputting path of the display area AA of the display unit 106'. In an embodiment, the activating unit 104' automatically activates a three-dimensional image displaying function of the display device 100 when the activating unit 104' (such as the optical element) contacts the touch display device.

The present embodiment is also exemplified by the reference image P1 and the registration image P2 for description purpose. When the cross represented by the registration image P2 is not located within the center of the hollowed cross represented by the reference image P1, the user may perform an adjusting step in which touch display unit 106' inputs an adjusting command to adjust the registration image P2. Meanwhile, the adjusting command is inputted by way of sliding the touch display unit 106' with a finger or other ways of contacting the touch display unit 106', and the invention is not limited thereto.

Then, the display unit 106' may output the adjusting command to the processing device 102. The processing device 102 generates a computing result according to the adjusting command to obtain an adjusting result. Specifically, the adjusting command inputted each time when the adjusting step is performed may correspond to an adjusting message such as shifting the registration image P2 for a particular distance in a particular direction. After performing the adjusting step for many times, the processing device 102 may obtain a plurality of adjusting messages. The processing device 102 may add up the adjusting messages to obtain the adjusting result. If it is judged that the adjusting result is correct, the computing unit 1024 may generate a computing result according to the adjusting result and output an adjusted image to the display unit 106' according to the computing result. Detailed procedures of the method of generating a computing result by the computing unit 1024 are disclosed in FIGS. 2-4 and Tables 1~3, and are not repeated here.

### Third Embodiment

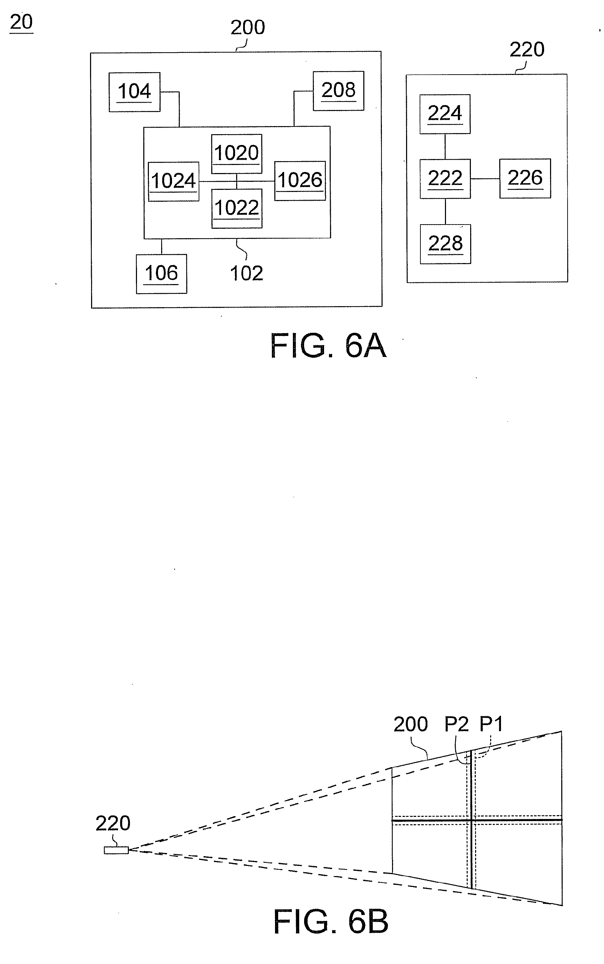

FIG. 6A shows a schematic diagram of a three-dimensional image display adjusting system 20 according to an alternate embodiment of the invention. Referring to FIG. 6A, the three-dimensional image display adjusting system 20 comprises a display device 200 and a communication device 220. The display device 200, such as switchable 2D/3D switchable display device, comprises a processing device 102, an activating unit 104, a display unit 106 and a first communication unit 208. The processing device 102 may comprise a storage unit 1020, a signal generation unit 1022, a computing unit 1024 and a driving unit 1026. Since the display device 200 is similar to the display device 100, the same elements retain the same designations and the similarities are not repeated here. The display device 200 is different from the display device 100 in that the display device 200 further comprises a first communication unit 208.

The communication device 220 may be realized by any electronic devices having network communication function such as cameras, mobile phones, and remote controllers, or may be realized by any headsets or glasses having Bluetooth or network communication function. The communication device 220 may comprise a processing device 222, an image capturing unit 224, an input unit 226 and a second communication unit 228. The processing device 222 and the processing device 102 are similar to each other, and the user can choose any one of them. In the following embodiment, the display device 200 comprises the processing device 102. However, as long as the communication device 220 comprises a processing device 222, the communication device 220 may replace the processing device 102 of the display device 200 with the processing device 222 which performs the function of the processing device 102.

FIG. 6B shows a schematic diagram of a three-dimensional image display adjusting method according to an alternate embodiment of the invention. Referring to at the same time FIG. 6A~6B. The display device 200 has a display unit 106 used for displaying the adjusting pattern (i.e. the reference image P1 and the registration image P2). In the present embodiment, the activating unit 104 is used for activating a three-dimensional image displaying function. In an embodiment, the activating unit 104 is such as a start button, and the user may touch the start button to activate the three-dimensional image displaying function. In another embodiment, a trigger signal is inputted via the input unit 226 of the communication device 220 for commanding the display device 200 to activate the three-dimensional image displaying function.

The present embodiment is also exemplified by the reference image P1 and the registration image P2. The input unit 226 of the communication device 220 is such as a keyboard, a press button, a turntable or a roller, or an input interface of other forms, and the invention is not limited thereto. The image capturing unit 224 of the communication device 220 is a charge-coupled device (CCD) such as a camera used for capturing the information of a frame displayed by the display unit 106, and the second communication unit 226 further transmits the captured frame information to the first communication unit 208. Then, the processing device 102 compares the frame information with the adjusting pattern, and generates a computing result according to the adjusting command to obtain an adjusting result. In an embodiment, the communication device 220 may use the processing device 222 to compare the frame information with the adjusting pattern to obtain an adjusting result, and then use the second communication unit 226 to transmit the adjusting result to the first communication unit 208. The transmission between the first communication unit 208 and the second communication unit 226 can be implemented by way of Wi-Fi of a wireless local area network (WLAN), Bluetooth, infrared (IR) light or digital living network alliance (DLNA), and the invention is not limited thereto.

When the cross represented by the registration image P2 is not located within the center of the hollowed cross represented by the reference image P1, it is judged that the three-dimensional image is not correctly formed. Meanwhile, the processing device 102 may perform an adjusting step in which an adjusting command is provided to the display unit 106, such that the registration image P2 is located within the hollowed cross represented by the reference image P1. The processing device 102 may generate a computing according to the adjusting command to obtain an adjusting result. In an embodiment, the processing device 222 replaces the processing device 1022 and performs the adjusting step, and the second communication unit 228 transmits the adjusting result to the first communication unit 208. Then, the first communication unit 208 outputs the adjusting result to the display unit 106.

Then, the processing device 102 continues to judge whether the adjusting result is correct. If yes, then the computing unit 1024 generates a computing result according to the adjusting result and outputs an adjusted image to the display unit 106 according to the computing result. If the adjusting result is incorrect, then the adjusting step is repeated until the adjusting result is correct. Detailed procedures of the method of generating a computing result by the computing unit 1024 are disclosed in FIG. 2-4 and Tables 1~3, and the similarities are not repeated here.

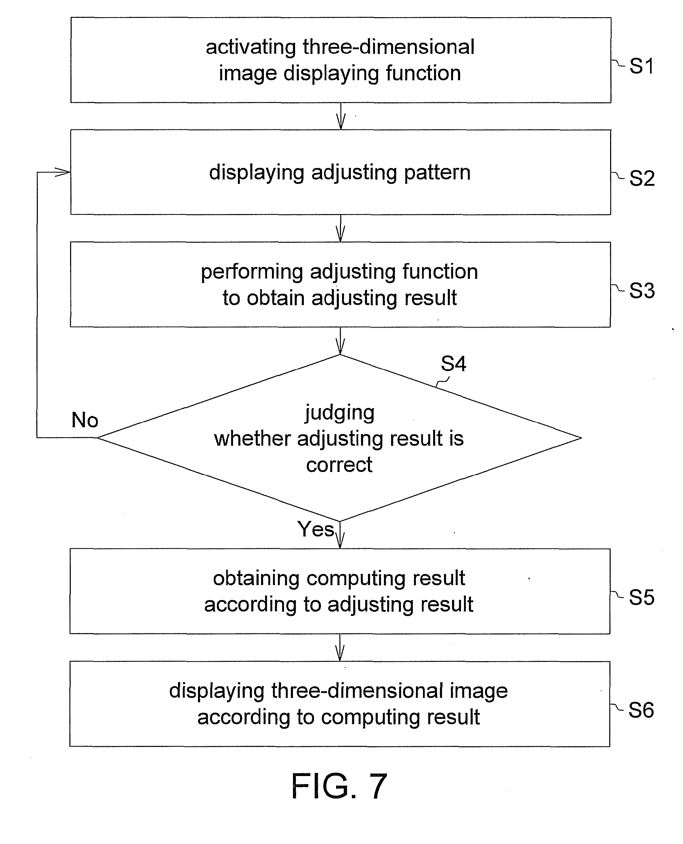

FIG. 7 shows a flowchart of a three-dimensional image display adjusting method according to an embodiment of the invention. Referring to FIG. 7. Firstly, the method begins at step S1, a three-dimensional image displaying function is activated. Next, the method proceeds to step S2, an adjusting pattern (three-dimensional) is displayed. Then, the method proceeds to step S3, an adjusting step is performed to obtain an adjusting result. Then, the method proceeds to step S4, whether the adjusting result is correct is judged. In the present step, the user may judge whether the adjusting result is correct according to the observed image or leave the judgment to be done by the processing device of a three-dimensional image display. If it is judged that the adjusting result is correct, then the method proceeds to step S5. In step S5, the processing device obtains a computing result according to the adjusting result. Then, the method proceeds to step S6, the computing result is outputted to the display unit for displaying a three-dimensional image. If it is judged that the adjusting result is incorrect, then steps S2~S4 are repeated until the adjusting result is correct.

A three-dimensional image display system and an adjusting method thereof are disclosed in above embodiments of the invention. A computing result is generated according to an adjusting result obtained by performing an adjusting step, such that the display device can output a correct three-dimensional image according to the computing result and the user will not feel uncomfortable with the image jumping when viewing the three-dimensional image.

While the invention has been described by way of example and in terms of the preferred embodiment(s), it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. An adjusting method, comprising:
displaying an adjusting pattern on a display device;
performing an adjusting step to obtain an adjusting result according to the adjusting pattern;
generating a computing result according to the adjusting result; and
outputting an adjusted three-dimensional image to the display device according to the computing result.

2. The adjusting method according to claim 1, wherein the adjusting step further comprises:
obtaining a frame information by an image capturing unit; and
comparing the frame information with the adjusting pattern by a processing device to obtain the adjusting result.

3. The adjusting method according to claim 2, wherein the method further comprises:
transmitting the frame information or the adjusting result by a first communication unit of the display device and a second communication unit of a communication device.

4. The adjusting method according to claim 2, wherein the adjusting step further comprises:
receiving an adjusting message by the processing device, wherein the adjusting message is associated with a comparison result between the adjusting pattern and the frame information; and
computing the adjusting result according to the adjusting message.

5. The adjusting method according to claim 1, wherein the step of generating the computing result further comprises:
providing N view-angle matrix tables formed through arrangement of N view-angle information of an image, wherein N is a natural number greater than 2;
providing N operation tables respectively corresponding to the N view-angle matrix tables, wherein each of the operation tables comprises a plurality of weighting information associated with the adjusting result; and
computing the sum of the product of each of the view-angle information and the corresponding weighting information to obtain adjusted N view-angle frame information;
wherein the step of providing N view-angle matrix tables comprises:
providing N view-angle frames of the image, wherein each of the view-angle frames comprises M positions corresponding to M pixel information;
providing N initial matrixes, wherein each of the initial matrixes comprises M positions; and
filling the view-angle information of the view-angle frames in the corresponding positions in the initial matrixes to obtain the view-angle matrix tables.

6. The adjusting method according to claim 1, wherein the method comprises activating a three-dimensional image displaying function of the display device to display a three-dimensional image before displaying the adjusting pattern on the display device;
wherein the step of activating the three-dimensional image displaying function of the display device comprises:
detecting by the processing device whether an optical element of an activating unit contacts a touch display unit; and
outputting a trigger signal by the processing device to automatically activate the three-dimensional image displaying function.

7. The adjusting method according to claim 1, further comprising:
judging whether the adjusting result is correct,
if yes, the adjusted three-dimensional image is outputted to the display device,
if no, the adjusting step is repeated;
wherein the adjusting step further comprises:
obtaining the adjusting command and an initial information by an image capturing unit of the display device; and
obtaining the adjusting pattern according to the adjusting command and the initial information.

8. A three-dimensional display system, comprising:
a display device having a display unit, for displaying a three-dimensional image and an adjusting pattern; and
a processing device electrically connected to the display unit, for performing an adjusting step to obtain an adjusting result according to the adjusting pattern, generating a computing result according to the adjusting result, and outputting an adjusted three-dimensional image to the display unit according to the computing result.

9. The three-dimensional display system according to claim 8, further comprising a communication device having an image capturing unit, for obtaining a frame information displayed by the display unit, wherein the processing device compares the frame information with the adjusting pattern to obtain the adjusting result, wherein the display device has a first communication unit, the communication device has a second communication unit, and the frame information or the adjusting result is transmitted by the first information supplying unit and the second communication unit.

10. The three-dimensional display system according to claim 8, wherein the processing device is further used for receiving an adjusting message associated with a comparison result between the adjusting pattern and the frame information, and the processing device computes the adjusting message to obtain the adjusting result.

11. The three-dimensional display system according to claim 8, wherein the processing device further comprises:
a driving unit, for providing a driving signal to the display unit;
a storage unit, for storing N view-angle matrix tables formed through repeated arrangement of N view-angle information of an image, wherein N is a natural number greater than 2;
a signal generation unit, for generating operation tables having the same number as that of N view-angles; and
a computing unit, for generating N operation tables according to the adjusting result and computing the sum of the product of each view-angle information and corresponding weighting information to output adjusted N view-angle matrix pixel information, wherein the operation tables respectively corresponding to the view-angle matrix tables, each operation table has a plurality of weighting information associated with the adjusting result.

12. The three-dimensional display system according to claim 11, wherein each operation table has a plurality of columns and a plurality of rows of the weighting information, the rows of the weighting information respectively correspond to a plurality of periodic functions, and sum of the weighting information corresponding to the same column and the same row of each operation table is not greater than 1.

13. The three-dimensional display system according to claim 11, wherein each view-angle matrix table has a plurality of positions, the adjusted N view-angle matrix pixel information comprises sum of product of the view-angle information stored in the same coordinate of each view-angle matrix table and different weights.

14. The three-dimensional display system according to claim 8, wherein the display device further comprises an activating unit, for activating a three-dimensional image displaying function of the display device; wherein the display is a touch display unit, and the activating unit is an optical element used for changing a light outputting path of the display unit, and the three-dimensional image displaying function is automatically activated when the optical element contacts the touch display unit.

15. The three-dimensional display system according to claim 8, wherein the display device further comprises an image capturing unit, for obtaining an initial information and the adjusting command and outputting the initial information and the adjusting command to the processing device, such that the processing device obtains the adjusting result according to the initial information and the adjusting command.
